(19) Europäisches Patentamt / European Patent Office / Office européen des brevets

(11) **EP 4 738 168 A1**

(12) **EUROPEAN PATENT APPLICATION**

(43) Date of publication:
06.05.2026 Bulletin 2026/19

(21) Application number: 25203535.7

(22) Date of filing: 22.09.2025

(51) International Patent Classification (IPC):
*G06F 21/62* (2013.01)   *G06F 16/332* (2025.01)
*G06F 16/3329* (2025.01)   *G06F 40/20* (2020.01)
*G06F 40/30* (2020.01)   *G06N 3/044* (2023.01)
*G06N 3/045* (2023.01)   *G06N 3/0475* (2023.01)
*G06N 3/09* (2023.01)

(52) Cooperative Patent Classification (CPC):
**G06F 21/6245; G06F 40/20; G06F 40/216; G06F 40/30; G06N 3/044; G06N 3/045; G06N 3/0475; G06N 20/00;** G06N 3/09

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 05.11.2024 IN 202421084709

(71) Applicant: **Tata Consultancy Services Limited Maharashtra (IN)**

(72) Inventors:
• **ANTONY, Delton Myalil**
  **682042 Kochi, Kerala (IN)**
• **RAMRAKHIYANI, Nitin Vijaykumar**
  **382009 Gandhinagar, Gujarat (IN)**
• **PAWAR, Sachin Sharad**
  **411057 Pune, Maharashtra (IN)**
• **APTE, Manoj Madhav**
  **411057 Pune, Maharashtra (IN)**
• **ALASINGARA BHATTACHAR, Rajan Mindigal**
  **560066 Bangalore, Karnataka (IN)**
• **SAGLANI, Divyesh**
  **411057 Pune, Maharashtra (IN)**
• **SHAIK, Imtiyazuddin**
  **500081 Hyderabad, Telangana (IN)**
• **LODHA, Sachin Premsukh**
  **411057 Pune, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR MITIGATING ENTERPRISE DATA LEAKAGE IN QUERIES TO LARGE LANGUAGE MODELS**

(57) Unrestricted access to large language models (LLM) based services can lead to potential data leakages, especially for large enterprises providing products and services to clients that require legal confidentiality guarantees. However, a blanket restriction on such services is not ideal as these LLMs boost employee productivity. Objective of the present disclosure is to build a solution that enables enterprise employees to query such external LLMs, without leaking confidential internal and client information. QueryShield platform of the present disclosure is a platform that enterprises can use to interact with external LLMs without leaking data through queries. It detects if a query leaks data and rephrases it to minimize data leakage while limiting the impact to its semantics. A language model is chosen from a set of lightweight model candidates that are identified and fine tuned for this purpose using a huge dataset and evaluated using multiple metrics.

FIG. 1B

**Description**

CROSS-REFERENCE TO RELATED APPLICATIONS AND PRIORITY

The present application claims priority to Indian application no. 202421084709, filed on November 5, 2024.

TECHNICAL FIELD

The disclosure herein generally relates to the field of machine learning and, more particularly, to a method and system for mitigating enterprise data leakage in queries to large language models.

BACKGROUND

The rapid advancement of Generative AI (Gen-AI), especially Large Language Models (LLMs), has significantly improved productivity across various industries. These models, capable of understanding and generating human-like text, save considerable time in tasks that traditionally required extensive human effort. This efficiency allows businesses to enhance throughput without sacrificing output quality. AI is emerging as a tool that augments human capabilities, and by integrating AI, businesses can maintain a competitive edge. Companies that adopted AI experienced substantial productivity gains over those who did not. This disparity has further expanded with the introduction of Gen-AI.

However, the privacy, security and safety implications of Gen-AI demands special investigation. It was observed that sensitive details inadvertently surfacing in model outputs since they are trained on gargantuan datasets. The accurate and coherent performance of LLMs emerges from their ability to memorize rare training samples, and this poses significant privacy threats when the datasets used to train them contain sensitive data. In contrast, there is potential for data leakage to an LLM through user queries as humans are the weakest link in security and privacy. LLM service providers may use this interaction data for further model training, and this may consequently spill the same sensitive data, that was once sent as a query, when attacked.

This risk is further exacerbated when employees of companies, in attempts to gain competitive edge, leak confidential company data through their prompts to an external LLM service such as Chat GPT or Google Gemini. Despite the confidentiality guarantees provided by the LLM service providers, there have been unintentional instances where chat data was leaked. This concern has led some companies to enforce an organizational ban on chat models. Such restrictions severely impact the competitive edge of a company, especially if competent in-house alternatives are not provided. There is an increasing need for a privacy preserving prompting solution that not only safeguards against data leakage, but also ensures that the utility provided by powerful external LLMs like GPT-4o is not impacted.

SUMMARY

Embodiments of the present disclosure present technological improvements as solutions to one or more of the above-mentioned technical problems recognized by the inventors in conventional systems. For example, in one embodiment, a method for mitigating enterprise data leakage in queries to large language models (LLMs) is provided. The method includes receiving, by one or more hardware processors, an input user query associated with querying a plurality of large language models (LLMs). Further, the method includes computing, by the one or more hardware processors, a sensitive data leakage level associated with the input user query by prompting a trained enterprise data leakage mitigation model based on a first set of specific instructions (T1) as prefix to the input user query, wherein the sensitive data leakage level is classified as one of (i) a high and (ii) a low based on an associated threshold value. Furthermore, the method includes generating, by the one or more hardware processors, via the trained enterprise data leakage mitigation model if the sensitive data leakage level is higher than a predefined threshold, a plurality of rephrased queries associated with the input user query that retain semantics of the input user query and reduce sensitive data leakage level by prompting the trained enterprise data leakage mitigation model with a second set of specific instructions (T2) as prefix to the user query. Furthermore, the method includes simultaneously identifying, by the one or more hardware processors, types of the sensitive data leakage associated with the input user query by prompting the trained enterprise data leakage mitigation model based on a third set of specific instructions (T3) as prefix to the input user query in the trained enterprise data leakage mitigation model. Finally, the method includes repeating, by the one or more hardware processors, the above steps until generating an optimal rephrased query with the sensitive data leakage level less than the predefined threshold.

In another aspect, a system for mitigating enterprise data leakage in queries to large language models (LLMs) is provided. The system includes at least one memory storing programmed instructions, one or more Input /Output (I/O) interfaces, and one or more hardware processors operatively coupled to the at least one memory, wherein the one or more hardware processors are configured by the programmed instructions to receive an input user query associated with querying a plurality of large language models (LLMs). Further, the one or more hardware processors are configured by the programmed instructions to compute a sensitive data leakage level associated with the input user query by prompting a trained enterprise data leakage mitigation model based on a first set of specific instructions (T1) as prefix to the input user query, wherein the sensitive data leakage level is classified as one of (i) a high and (ii) a low based on an associated threshold value. Furthermore, the one or more hardware processors are configured by the programmed instructions to generate via the trained enterprise data leakage mitigation model if the sensitive data leakage level is higher than a predefined threshold, a plurality of rephrased queries associated with the input user query that retain semantics of the input user query and reduce sensitive data leakage level by prompting the trained enterprise data leakage mitigation model with a second set of specific instructions (T2) as prefix to the user query. Furthermore, the one or more hardware processors are configured by the programmed instructions to simultaneously identify types of the sensitive data leakage associated with the input user query by prompting the trained enterprise data leakage mitigation model based on a third set of specific instructions (T3) as prefix to the input user query in the trained enterprise data leakage mitigation model. Finally, the one or more hardware processors are configured by the programmed instructions to repeat the above steps until generating an optimal rephrased query with the sensitive data leakage level less than the predefined threshold.

In yet another aspect, a computer program product including a non-transitory computer-readable medium embodied therein a computer program for mitigating enterprise data leakage in queries to large language models (LLMs) is provided. The computer readable program, when executed on a computing device, causes the computing device to receive an input user query associated with querying a plurality of large language models (LLMs). Further, the computer readable program, when executed on a computing device, causes the computing device to compute a sensitive data leakage level associated with the input user query by prompting a trained enterprise data leakage mitigation model based on a first set of specific instructions (T1) as prefix to the input user query, wherein the sensitive data leakage level is classified as one of (i) a high and (ii) a low based on an associated threshold value. Furthermore, the computer readable program, when executed on a computing device, causes the computing device to generate via the trained enterprise data leakage mitigation model if the sensitive data leakage level is higher than a predefined threshold, a plurality of rephrased queries associated with the input user query that retain semantics of the input user query and reduce sensitive data leakage level by prompting the trained enterprise data leakage mitigation model with a second set of specific instructions (T2) as prefix to the user query. Furthermore, the computer readable program, when executed on a computing device, causes the computing device to simultaneously identify types of the sensitive data leakage associated with the input user query by prompting the trained enterprise data leakage mitigation model based on a third set of specific instructions (T3) as prefix to the input user query in the trained enterprise data leakage mitigation model. Finally, the computer readable program, when executed on a computing device, causes the computing device to repeat the above steps until generating an optimal rephrased query with the sensitive data leakage level less than the predefined threshold.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for mitigating enterprise data leakage in queries to large language models (LLMs), in accordance with some embodiments of the present disclosure.
FIG. 1B illustrates overall functional architecture of the system for mitigating enterprise data leakage in queries to LLMs, in accordance with some embodiments of the present disclosure.
FIG. 2 illustrates a flow diagram for a processor implemented method for mitigating enterprise data leakage in queries to LLMs, in accordance with some embodiments of the present disclosure.
FIG. 3 illustrates the distribution of data leakage types for mitigating enterprise data leakage in queries to LLMs, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Sensitive data leakage while querying Large Language Models (LLMs) is an increasing concern nowadays. This risk is further exacerbated when employees of an organization, in attempts to gain competitive edge, leak confidential company data through their prompts to LLM service such as Chat-GPT or Google Gemini. Hence there is an increase in need for privacy preserving prompting solution that not only safeguards against data leakage but also ensures that the utility provided by powerful external LLMs like GPT-4o is not impacted. This is an instance of Private Inferencing (PI) problem of neural networks, where inferencing is done on encrypted data. Cryptographic methods like Fully Homomorphic Encryption (FHE) and Secure MultiParty Computation (MPC) also are employed to solve this problem. However, the communication and computation complexities of the above methods make it unrealistic to perform inference on large language models. Moreover, cryptographic methods require implementation in the server-side and the client (prompter) side. Execution of server-side code is not entertained by external LLM providers like Open-AI (ChatGPT), rendering such solutions impractical.

A direct solution is data sanitization, where the parts of the text that leak sensitive information are detected. This approach is limited by the fact that even generic words leak private information when the context in which they are used changes. So, a method that analyzes the potential for data leakage from a query as a whole is needed. Additionally, this analysis should be used to rephrase the query such that data leakage, if any, is minimized, without impacting the semantic integrity of the message that the query aims to convey. This requires a system that can semantically understand the query, while simultaneously understanding the concept of data leakage.

Private Inferencing (PI) refers to the process of drawing predictions from a neural network while keeping the input to the neural network private. This is conventionally realized using cryptographic methods like Fully Homomorphic Encryption (FHE). FHE have high communication overheads, hybrid approaches that aim to optimize the solution from both an ML, and FHE perspectives were used to advance PI offerings. The sheer scale of LLMs made even such optimizations insufficient to achieve PI in real-time. This shifted the focus to other Natural Language Processing (NLP) methods. The first of such attempts included the usage of Parts of Speech (POS) tagging, Named Entity Recognition 157 (NER) and Personally Identifiable Information (PII) detection. Differential Privacy (DP) based methods add noise into private data to guarantee plausible deniability is used in LLM queries at the word, sentence, and document levels. Word level implementations where noise is added to word embeddings are limited by context-based data leakage. Sentence level DP approaches introduce noise in sentence embeddings. These captures context-based data leakages where words leak data depending on the context in which they are used.

To address the technical complexity of conventional approaches, embodiments herein provide a method and system for mitigating enterprise data leakage in queries to large language models (LLMs). The present disclosure provides QueryShield, a platform that lies between the enterprise environment and any external LLM. It detects outgoing queries that leak sensitive data and rephrases them to remove the sensitive contents. Queries that do not leak sensitive data are allowed to pass through to the external LLM while the rephrased versions of high sensitive queries, along with the identified types of leakage are fed back to the user who can optionally edit and re-submit them. The specific contributions of the present disclosure are:

- Evaluation of contemporary lightweight language models for the tasks of identifying and rephrasing data leakage found in enterprise queries especially the multi-task encoder-decoder models that were fine-tuned using curriculum learning.
- A dataset of 1500 queries which can be fired from an enterprise environment to an external LLM, labelled with data leakage sensitivity as well as their corresponding gold-standard human rephrased versions for high sensitivity queries.
- A novel evaluation metric Cross-Reference ROUGE that evaluates semantic-preserving re-phrasal of sensitive queries.

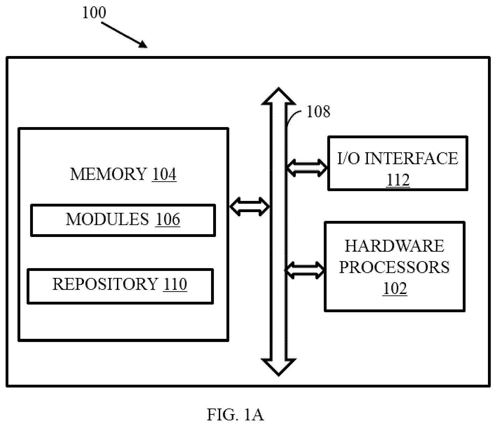

Referring now to the drawings, more particularly to FIG. 1A through FIG. 3, where similar reference characters denote corresponding features consistently throughout the figures, there are shown preferred embodiments, and these embodiments are described in the context of the following exemplary system and/or method.

FIG. 1A is a functional block diagram of system 100 for Mitigating enterprise data leakage in queries to large language models, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, Graphical Processing Units (GPUs), node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, Video Random Access Memory (VRAM) and magnetic tapes. In an embodiment, memory 104 includes a plurality of modules 106. Memory 104 also includes a data repository (or repository) 110 for storing data processed, received, and generated by the plurality of modules 106.

The plurality of modules 106 includes programs or coded instructions that supplement applications or functions performed by the system 100 for mitigating enterprise data leakage in queries to large language models. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for Mitigating enterprise data leakage in queries to large language models.

The data repository (or repository) 110 may include a plurality of abstracted pieces of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory, or a Relational Database Management System (RDBMS).

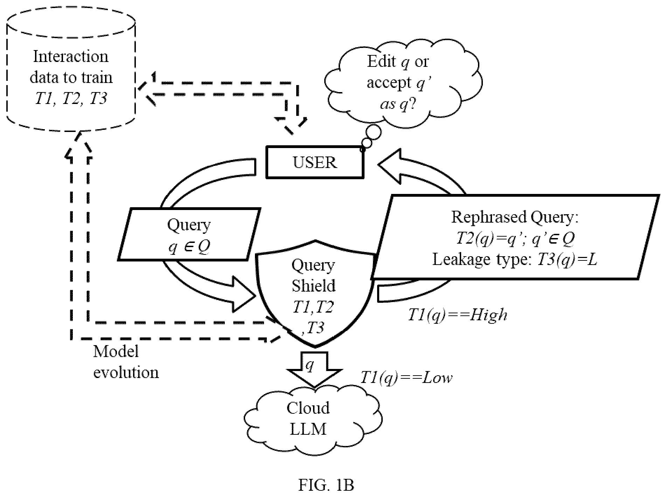

The overall architecture of the system of FIG. 1A is explained in conjunction with FIG. 1B. Now referring to FIG. 1B, the present disclosure detects outgoing queries that leak sensitive data and rephrases them to remove the sensitive contents. Queries that do not leak sensitive data are allowed to pass through to the external LLM while the rephrased versions of high-sensitive queries, along with the identified types of leakage as an explanation, are fed back to the user who can optionally edit and re-submit them.

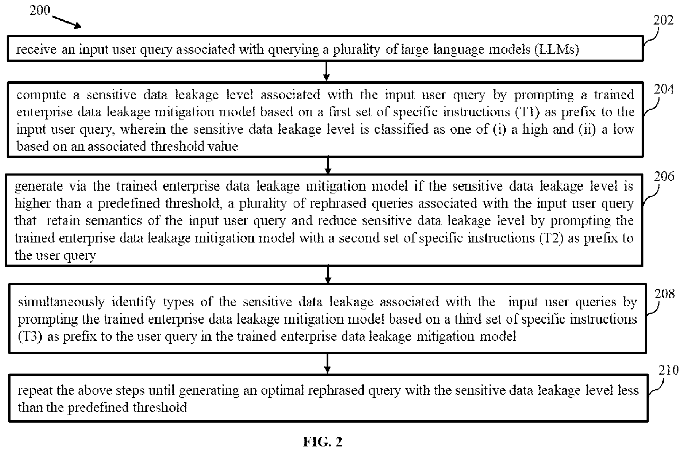

The working of the components of system 100 are explained with reference to the method steps depicted in FIG. 2.

FIGS. 2 is an exemplary flow diagram illustrating a method 200 for mitigating enterprise data leakage in queries to large language models implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and 1B and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types.

The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG. 2, at step 202 of method 200, the one or more hardware processors 102 are configured by the programmed instructions to receive an input user query associated with querying a plurality of LLMs.

At step 204 of the method 200, the one or more hardware processors 102 is configured by the programmed instructions to compute a sensitive data leakage level associated with the input user query by prompting a trained enterprise data leakage mitigation model based on a first set of specific instructions (T1) as prefix to the input user query, wherein the sensitive data leakage level is classified as one of (i) a high and (ii) a low based on an associated threshold value.

The user is allowed to query an associated LLM from among the plurality of LLMs using the input user query only if the sensitive data leakage level is less than the predefined threshold value. The LLM can be an internal LLM or an external LLM.

At step 206 of the method 200, the one or more hardware processors 102 are configured by the programmed instructions to generate, via the trained enterprise data leakage mitigation model if the sensitive data leakage level is higher than a predefined threshold, a plurality of rephrased queries associated with the input user query that retain semantics of the input user query and reduce sensitive data leakage level by prompting the trained enterprise data leakage mitigation model with a second set of specific instructions (T2) as prefix to the user query.

At step 208 of the method 200, the one or more hardware processors 102 is configured by the programmed instructions to simultaneously identify types of the sensitive data leakage associated with the input user query by prompting the trained enterprise data leakage mitigation model based on a third set of specific instructions (T3) as prefix to the user query in the trained enterprise data leakage mitigation model. The types of sensitive data leakage include but not limited to Personally Identifiable Information (PII), business relationship information, proprietary data, internal policies, strategic plans, research and development information. The identified types of sensitive data leakage associated with the input user query is intimated to the user/administrator who can optionally edit the queries if needed and further utilized for updating the data leakage mitigation model.

For example, the PII includes the names of any person, contact information like email or address. The business Relationships Information includes names of customers or vendors, their contact information, relationship value, deal information, and contract clauses. The proprietary data is any kind of internal confidential/private data of an enterprise such as internal data and work artifacts. For an IT company, it would be source code, software requirements, algorithms, implementation details. For a hospital, it would be treatment details, investigation reports, etc. The internal policies include the internal policies and procedures, security protocols, internal audits, project management guidelines/data, governance and compliance guidelines/data. The strategic plans include long term strategy, product/service launch plans, proposed mergers/acquisitions/partnerships, marketing and sales strategies (like detailed sales projections, campaign information). The research and development information includes latest research initiatives, ideas, unpublished intellectual property.

At step 210 of the method 200, the one or more hardware processors 102 is configured by the programmed instructions to repeat the above steps until generating an optimal rephrased query with the sensitive data leakage level less than the predefined threshold.

The enterprise data leakage mitigation model is obtained as follows: Initially, a plurality of user queries are obtained from a plurality of sources. The plurality of sources includes queries generated by a group of users, ChatGPT, and queries from a plurality of publicly available datasets. Further, a plurality of training instances for T1, T2 and T3 tasks are obtained from a plurality of sources. For example, T1 is for classifying the sensitive data leakage level in the plurality of user queries, T2 is for generating rephrased queries if a classified query has high sensitive data leakage level, and T3 is for detecting the types of sensitive data leakage level with respect to pre-defined list sensitive data leakage level. Post obtaining training instances, gold-standard labels are obtained for the plurality of training instances of T1, T2 and T3. The gold-standard labels for training instances of T1, T2 and T3 are obtained from an associated predefined plurality of annotations. Post obtaining the gold-standard labels, a pre-trained language model is finetuned with the training instances of T1 for K epochs. Each of the plurality of training instances of T1 includes input text paired with an expected labelled output text obtained from the predefined plurality of annotations. The plurality of training instances of T1 are debiased using an anomaly detection technique. Further, another language model is finetuned with the associated plurality of training instances of T1, and T3 for K epochs with a validation loss less than a predefined threshold. The validation loss is computed on a validation set in each of the K epochs and an optimum validation loss is selected over the K epochs based on a predefined validation threshold. Each of the plurality of training instances of T3 includes the paired high-sensitive data leakage level text and associated sensitive data leakage types based on the predefined plurality of annotations. The language model is finetuned further with the associated plurality of training instances of T1, T2, and T3 with the optimum validation loss. Each of the plurality of training instances of T2 includes the paired high-sensitive data leakage level text and rephrased output text generated based on the predefined plurality of annotations. The overall process of fine-tuning described above follows curriculum learning strategy where easier training instances are used first followed by increasing difficult instances. Post finetuning the language model, the trained language model is evaluated using a plurality of metrics.

For example, T1 is evaluated using recall and F1 score metric. T3 is evaluated using micro and macro averaged F1 scores. T2 is evaluated by: (i) computing a cross-reference score by comparing a plurality of rephrased queries, input user queries and a gold standard rephrased query (ii) computing a Named Entity Leakage (NEL) as the percentage of named entity terms in the plurality of rephrased queries occurring as part of false positives (iii) evaluating the plurality of rephrased queries for retaining the maximum original semantics of query-q using CRR score and NEL and (iv) precision of label "LOW" of T1.

In order to cover both these aspects (Leakage and Intent) in a single metric, the present disclosure utilized an evaluation metric called Cross-Reference ROUGE (CRR) which compares the generated text with two references (the original query as well as the gold-standard rephrased query), unlike vanilla ROUGE which uses a single reference. To explain the metric, its unigram form CRR1 (equation 1 through 7) is considered. Let $O$, $G$, and $R$ be the sets of unigrams in the original query, the gold-standard rephrased query, and the model-generated rephrased query, respectively. Now referring to the equations 1 through 7, leakage aspect: $O\backslash G$ captures the sensitive contents of the original query and any overlap of $R$ with this sensitive content would indicate Excess Leakage. Hence, such overlap is the set of false positives ($FPl$) which shouldn't have been there in $R$ (Equation 1). The remaining terms in $R$ are considered as true positives (Equation 2) and are used to compute $CRRI_P$ (Equation 3). Intent aspect: $O \cap G$ captures the allowable intent of the original query and absence of these terms in $R$ indicates Intent Loss. Hence, these missing terms are the false negatives ($FN_i$) (Equation 4). The remaining terms in $O \cap G$ are considered as true positives (Equation 5) and are used to compute $CRRI_R$ (Equation 6). Finally, the $CRR1_{F1}$ score (Equation 7) is computed as the final metric.

$$FP_l = |(O\backslash G) \cap R| \dots\dots\dots\dots\dots\dots(1)$$

$$TP_l = |R\backslash FP_l| \dots\dots\dots\dots\dots\dots\dots(2)$$

$$CRR1_l = \frac{TP_l}{TP_l+FP_l} \dots\dots\dots\dots\dots\dots(3)$$

$$FN_i = |(O \cap G)\backslash R| \dots\dots\dots\dots\dots\dots(4)$$

$$TP_l = |(O \cap G)\backslash FN_i| \dots\dots\dots\dots\dots(5)$$

$$CRR1_R = \frac{TP_i}{TP_i+FP_i} \dots\dots\dots\dots\dots\dots(6)$$

$$CRR1_{F1} = \frac{2.CRR1_P.CRR1_R}{CRRI_P +CRRI_R} \dots\dots\dots\dots\dots(7)$$

For example, encoder-only models are used for Tasks T1 and T3 which are binary classification and multilabel multi-class classification tasks, respectively. Task T2 being a text generation task, encoder-only models are not applicable. Based on prior work, Attn-BERT which uses attention weighted BERT representations of tokens in a query, concatenated with the [CLS] representation of the query was used. CLS stands for classification. The concatenated representation is passed through a softmax layer for final prediction. For multi-label classification, each class label has a separate attention head and leads to its specific representation.

The prompt used for Tasks T1 and T3 by the decoder-only models is given in Table IA.

Table IA

| |
| --- |
| From an organization's perspective, data leakage can be of following types: |
| 1. Personally Identifiable Information (PII): Names of any person, contact information like email or address |
| 2. Business Relationships Information: Names of customers or vendors, their contact information, relationship value, deal information, contract clauses |
| 3. Proprietary Data: Any kind of internal confidential/private data of an enterprise such as internal data and work artifacts. For an IT company, it would be source code, software requirements, algorithms, implementation details. For a Hospital, it would be treatment details, investigation reports, etc. |
| 4. Internal Policies: Internal policies and procedures, security protocols, internal audits, project management guidelines/data, governance and compliance guidelines/data. |
| 5. Strategic Plans: Long term strategy, product/service launch plans, proposed mergers/acquisitions/partnerships, marketing and sales strategies (like detail sales projections, campaign information) |

(continued)

6. Research and Development: Latest research initiatives, ideas, unpublished intellectual property

There may be multiple data leakage types present in a Query sent to an LLM.

Identify whether the following queries have data leakage levels of HIGH or LOW.

In case of HIGH data leakage level, also identify the types of data leakage types present in the Query.

**Query:** (training_query1)

**Data Leakage Level:** HIGH / LOW

**Data Leakage Types:** ⟨data_leakage_types_in_query1⟩ ⋯

**Query:** (training_query8)

**Data Leakage Level:** HIGH / LOW

**Data Leakage Types:** ⟨data_leakage_types_in_query8⟩

**Query:** ⟨test_query⟩

Similarly, the prompt used for Tasks T2 by the decoder-only models is given in Table IB.

Table IB

From an organization's perspective, data leakage can be of following types:

1. Personally Identifiable Information (PII): Names of any person, contact information like email or address

2. Business Relationships Information: Names of customers or vendors, their contact information, relationship value, deal information, contract clauses

3. Proprietary Data: Any kind of internal confidential/private data of an enterprise such as internal data and work artifacts. For an IT company, it would be source

code, software requirements, algorithms, implementation details. For a Hospital, it would be treatment details, investigation reports, etc.

4. Internal Policies: Internal policies and procedures, security protocols, internal audits, project management guidelines/data, governance and compliance guidelines/data.

5. Strategic Plans: Long term strategy, product/service launch plans, proposed mergers/acquisitions/partnerships, marketing and sales strategies (like detail sales projections, campaign information)

6. Research and Development: Latest research initiatives, ideas, unpublished intellectual property

There may be multiple data leakage types present in a Query sent to an LLM. Rephrase the following Queries by removing applicable data leakage types while ensuring that the rephrased Query retains the original meaning as much as possible.

Query: ⟨training_query1⟩

Rephrased Query: ⟨rephrased_training_query1⟩

…

Query: (training_query8)

Rephrased Query: ⟨rephrased_training_query8⟩

Query: ⟨test_query⟩

Rephrased Query: language model to generate its response here...

For example, decoder-only models are used to solve all the three tasks using few-shot in-context learning. For each task, a prompt which consists of the detailed definition of data leakage in terms of the 6 types followed by an instruction to generate the desired output was designed. For in-context learning, a few demonstrations of the task are added as few-shot examples. For each query in the test set, 8 most similar queries are chosen from the training set to use as few shot examples. For T2, HIGH sensitivity training queries are only selected whereas for T1 and T3, 4 HIGH and 4 LOW sensitivity training queries are selected. To identify the most similar queries from the training set, cosine similarity between the text embeddings which were obtained using a sentence transformer model was used.

For example, encoder-decoder models are utilized because they offer text generation capabilities (unlike encoder-only models) as well as they are more amenable to fine-tuning due to their moderate size (unlike larger decoder-only models). In this, the three tasks T1, T2 and T3 are formulated as text-to-text transformation tasks and fine-tune a single T5-base model for all the tasks. For each task, a specific instruction is prefixed to a query to construct the input text to the model. Table II shows the different instructions used for the tasks T1, T2, and T3. Also, the expected output for each task is different. For T1, the output text is simply data leakage level of the query which can be either HIGH or LOW.

For T2, the output text is the input query's rephrased version that contains no sensitive data and preserves the original semantics as much as possible. For T3, the output text is simply a comma-separated list of data leakage types present in the input query. Consideration of the T5-base model was also necessitated by the constraint that the model should be deployable by an organization in-house with limited hardware resources.

Table II

| Task | Input text | Output text |
|------|-----------|-------------|
| T1 | What is the level of data leakage in the following Query with respect to private and confidential information of an organization? Answer as HIGH or LOW. **Query:** (query) | **Data Leakage Level:** HIGH/-LOW |
| T2 | From an organization's perspective, data leakage can be of the following types - Personally Identifiable Information (PII), Business Relationships Information, Proprietary Data, Internal Policies, Strategic Plans, Research and Development. Rephrase the following Query by removing the above data leakage types if present in the Query while ensuring that the rephrased Query retains the original meaning as much as possible. **Query:** (query) | **Rephrased Query:** (rephrased_query) |
| T3 | From an organization's perspective, data leakage can be of following types - Personally Identifiable Information (PII), Business Relationships Information, Proprietary Data, Internal Policies, Strategic Plans, Research and Development. Identify the data leakage types present in the following Query. **Query:** (query) | **Data Leakage Types:** ⟨comma_separated_types⟩ |

Some examples of rephrased queries obtained from the present disclosure is given below.

> **Original Query:** SecureLogin, a company specializing in cybersecurity solutions, is building a user authentication system for a new e-commerce platform like TrendyThreads. The platform needs to offer flexible login options like username/password and social media logins, while maintaining robust security measures. Can you suggest best practices for multi-factor authentication (MFA) and secure password hashing techniques to protect user data?
>
> **Gold-standard Rephrased Query:** A company is building a user authentication system for an e-commerce platform. Can you suggest best practices for multi-factor authentication (MFA) and secure password hashing techniques to protect user data?
>
> **Rephrased Query:** Can you suggest best practices for multi-factor authentication (MFA) and secure password hashing techniques to protect user data for a user authentication system for an e-commerce platform like TrendyThreads?
>
> **Rephrased Query:** Suggest best practices for multi-factor authentication (MFA) and secure password hashing techniques to protect user data for a user authentication system for an e-commerce platform, which is being built by SecureLogin, a cybersecurity solutions company. The platform should offer flexible login options like username/password and social media logins while maintaining robust security measures.

**Experimentation:**

**Data Collection and Labelling:** Initially a number of public datasets used for instruction tuning LLMs such as OASST11 and ChatAlpaca 20K2 are investigated. However, it was observed that the queries in these datasets rarely contained anything that is really sensitive from an organization's perspective and fits the description of sensitivity. Hence, it was 212 decided to create own dataset.

**Obtaining a collection of queries:** In an embodiment, 214 set of 1500 queries by using 3 different strategies.

- A set of 600 queries were created semi- 216 automatically. Multiple associates in an organization recorded an initial set of queries based on work requirements. Then ChatGPT was used as an assistant to generate similar additional queries by using human authored queries as seeds.
- A set of 300 queries were again generated by ChatGPT but by specifying a particular data leakage type at a time.

- A set of 600 queries was chosen randomly from a publicly available dataset ign_clean.

**Obtaining gold-standard labels:** Each query in the dataset was manually annotated as follows:

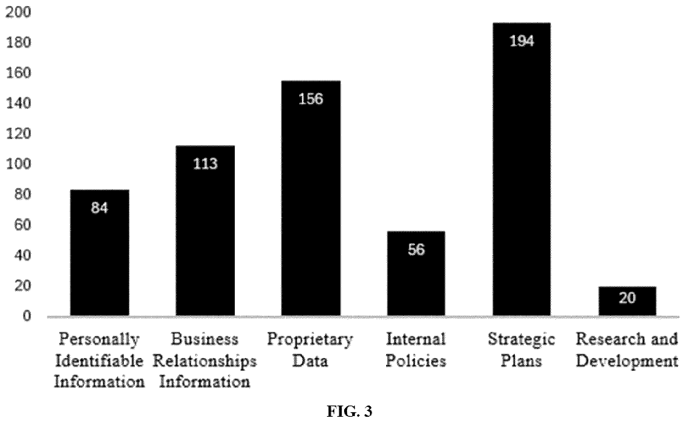

- Task T1: A label (HIGH or LOW) indicating whether the query contains any sensitive data from an organization's point of view.
- Task T2: When the T1 label is HIGH, a rephrased version of the query contains no sensitive data and its original semantics are preserved as much as possible.
- Task T3: When the T1 label is HIGH, a set of labels indicating the data leakage types mentioned in the query. For T1, each query was annotated by two annotators and the inter-annotator agreement in terms of Cohen's Kappa statistic was found to be 0.875. The disagreements were resolved through discussions. 464 queries out of 1500 were identified as HIGH sensitivity queries from a data leakage perspective. The manually rephrased versions of these 464 queries were added back to the dataset with T1 label as "LOW" (and T2/T3 labels as NA), making the final effective dataset size to be of 1964 queries. FIG. 3 shows how the 6 data leakage types are distributed and Table I shows a few examples of these annotations.

Table III

| |
|---|
| **Query:** What are the latest trends in employee benefits that we can incorporate into our benefits package, considering our current offerings such as health insurance plans, retirement savings programs, tuition reimbursement, and wellness initiatives? <br> **Data Leakage Level:** HIGH (T1) <br> **Rephrased Query:** What are the latest trends in employee benefits to incorporate into benefits packages? (T2) <br> **Data Leakage Types:** Internal Policies; Strategic Plans (T3) |
| **Query:** Our client, XYZ Pharmaceuticals, requires a mobile app to track patient medication adherence for a new experimental drug undergoing FDA approval. Develop a project plan outlining key milestones and deliverables. <br> **Data Leakage Level:** HIGH (T1) <br> **Rephrased Query:** Develop a project plan for a mobile app that tracks patient medication adherence for a new experimental drug undergoing FDA approval, outlining key milestones and deliverables. (T2) <br> **Data Leakage Types:** Business relationships Information, Proprietary data (T3) |
| **Query:** Write an in-depth analysis on the varying effects of long-term exposure to artificial light at night on different human health parameters such as sleep patterns, mental health, hormonal balance, cardiovascular health, and the risk of chronic diseases. Use reliable scientific sources to support your findings and provide actionable solutions to mitigate the negative effects of artificial light on human health. <br> **Data Leakage Level:** LOW (T1) <br> **Rephrased Query:** NA (T2) <br> **Data Leakage Types:** NA (T3) |
| **Query:** Please create a NodeJS server using Express that provides clients with access to JSON data through RESTful API endpoints. Ensure that the endpoints return data in a clear and concise format, and that appropriate HTTP status codes are used for <br> responses. Additionally, consider implementing error handling to provide users with meaningful feedback in case of any issues with the API requests. <br> **Data Leakage Level:** LOW (T1) <br> **Rephrased Query:** NA (T2) <br> **Data Leakage Types:** NA (T3) |
| **Query:** What are the latest trends in employee benefits to incorporate into benefits packages? (manually rephrased version of an original query with HIGH sensitivity (first query in this table) is added back to the dataset) <br> **Data Leakage Level:** LOW (T1) <br> **Rephrased Query:** NA (T2) <br> **Data Leakage Types:** NA (T3) |

It was observed during experimentation that the decoder-only models do not perform well for T1. For T3, Attn-BERT is the best model in terms of both micro and macro-F1. For T2, Mistral-7B-instruct performs the best in terms of

$CRR1_{F1}$ as well as $P_{T_1(x)}^{LOW}$ which are the two most important metrics for T2.

Results and Analysis: Table 2 shows the overall evaluation results for all the tasks in terms of all the metrics. For T1, T5-base_CL is the best performing model, closely followed by Attn-BERT. Decoder-only models do not perform well for T1. For T3, Attn-BERT is the best model in terms of both micro and macro-F1. For T2, Mistral-7B-instruct performs the best in terms of $CRR1_{F1}$ as well as $P_{T_1(x)}^{LOW}$ which are the two most important metrics for T2. Few examples of the rephrasing is highlighted in Table III. Over-all, T5-base_CL is the best model across the three tasks, because it is either the best or second best in terms of most metrics. Also, it was observed that T1 performance of T5-base_CL is uniformly high across all the 6 data leakage types.

Table IV

| Model | Task T1 | | | Task T2 | | | Task T3 | |
|---|---|---|---|---|---|---|---|---|
| | P | R | F1 | $CRR1_{P/R/F1}$ | $P_{T_1(x)}^{LOW}$ | $BS_{F1}$ | $\mu F1$ | $mF1$ |
| Attn-BERT | 0.873 | 0.976 | 0.921 | - | - | - | 0.616 | 0.524 |
| T5-base_CL (fine-tuned) | 0.902 | 0.946 | 0.923 | 0.866 / 0.909 / 0.867 | 0.903 | 0.875 | 0.553 | 0.399 |
| Mistral-7B-instruct (few-shot) | 0.509 | 0.597 | 0.550 | 0.881 / 0.906 / 0.880 | 0.924 | 0.872 | 0.41 | 0.402 |
| GPT-4o-mini (few-shot) | 0.599 | 0.752 | 0.667 | 0.869 / 0.921 / 0.880 | 0.864 | 0.880 | 0.500 | 0.476 |

**Ablation analysis:** Ablation analysis was carried out for T5-base_CL to gauge two design choices - curriculum learning and multi-task learning. It was observed that the performance of T1 and T3 gets affected significantly without curriculum learning as well as multi-task learning. For T2, the benefit of these two design choices is not very conclusive, especially multi task learning. However, it can be observed that the model trained only for T2 lags behind T5-base_CL in terms of $CRR1_{F1}$ and $P_{T_1(x)}^{LOW}$ both.

**Deployment Scenario:** QueryShield (the present disclosure) contains all three models, i.e., AttnBERT, T5-base_CL, and Mistral-7B-Instruct, configured by the system administrator considering (i) accuracy, (ii) inference time per query (iii) and fine-tuning capability where T5-base_CL can be fine-tuned using incremental training data from user feedback. Default recommendations for the best end-to-end accuracy would be using T5-base_CL for T1, Mistral-7B-Instruct for T2 and Attn-BERT for T3.

**Long queries:** One advantage that Mistral has over T5 is its longer context window. Hence, for a query longer than 512 tokens, Mistral model is preferred for rephrasing. For T1/T3 using T5-base_CL and Attn-BERT, if any longer query is encountered, it is first split into multiple chunks and inference is run separately for each chunk. If any of these chunks is found to be sensitive, then T1 predicts HIGH for overall query whereas T3 predicts union of leakage types predicted for all the chunks.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of mitigating enterprise data leakage in queries to large language models. The present disclosure provides balance between access to external LLMs and the potential risk of enterprise data leakage. The QueryShield platform of the present disclosure lies between any external LLM and the enterprise environment and detects sensitive data leakage in the queries as well as rephrases the original queries to remove any potential data leakage. The present disclosure explored multiple lightweight language models as part of QueryShield so that they can be hosted in-house with limited hardware resources. These models are evaluated for the tasks of detecting sensitive data leakage, rephrasing sensitive queries, and identifying data leakage types, using a manually annotated dataset of 1500 queries. Further, the present disclosure considers the *entire query* while detecting, rephrasing and identifying when compared to conventional approaches that consider individual words for detecting.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1.  A processor-implemented method (200), the method comprising:

    receiving (202), by one or more hardware processors, an input user query associated with querying a plurality of large language models (LLMs);

    computing (204), by the one or more hardware processors, a sensitive data leakage level associated with the input user query by prompting a trained enterprise data leakage mitigation model based on a first set of specific instructions (T1) as prefix to the input user query, wherein the sensitive data leakage level is classified as one of (i) a high and (ii) a low based on an associated threshold value;

    generating (206), by the one or more hardware processors, via the trained enterprise data leakage mitigation model if the sensitive data leakage level is higher than a predefined threshold, a plurality of rephrased queries associated with the input user query that retain semantics of the input user query and reduce sensitive data leakage level by prompting the trained enterprise data leakage mitigation model with a second set of specific instructions (T2) as prefix to the user query;

    simultaneously identifying (208), by the one or more hardware processors, types of the sensitive data leakage associated with the input user query by prompting the trained enterprise data leakage mitigation model based on a third set of specific instructions (T3) as prefix to the input user query in the trained enterprise data leakage mitigation model; and

    repeating (210), by the one or more hardware processors, the above steps until generating an optimal rephrased query with the sensitive data leakage level less than the predefined threshold.

2.  The processor implemented method as claimed in claim 1, wherein the user is allowed to query an associated LLM from among the plurality of LLMs using the input user query only if the sensitive data leakage level is less than a predefined threshold and, wherein identified types of the sensitive data leakage associated with the input user query is intimated to the user and further utilized for updating the data leakage mitigation model.

3. The processor implemented method as claimed in claim 1, wherein the enterprise data leakage mitigation model is obtained by:

receiving a plurality of user queries from a plurality of sources, wherein the plurality of sources comprises queries generated by a group of users, ChatGPT, and queries from a plurality of publicly available datasets;

obtaining a plurality of training instances for T1, T2 and T3 tasks from a plurality of sources, wherein T1 is for classifying the sensitive data leakage level in the plurality of user queries, T2 is for generating rephrased queries if a classified query has high sensitive data leakage level, and T3 is for detecting the types of sensitive data leakage level with respect to pre-defined list sensitive data leakage level;

obtaining a gold-standard labels for the plurality of training instances of T1, T2 and T3, wherein gold-standard labels for training instances of T1, T2 and T3 are obtained from an associated predefined plurality of annotations;

finetuning a pre-trained language model with the training instances of T1 for K epochs, wherein each of the plurality of training instances of T1 comprises input text paired with an expected labelled output text obtained from the predefined plurality of annotations, wherein the plurality of training instances of T1 are debiased using an anomaly detection technique;

finetuning a language model with the associated plurality of training instances of T1, and T3 for K epochs with a validation loss less than a predefined threshold, wherein the validation loss is computed on a validation set in each of the K epochs and an optimum validation loss is selected over the K epochs based on a predefined validation threshold, wherein each of the plurality of training instances of T3 comprises the paired high sensitive data leakage level text and labelled output text generated based on the predefined plurality of annotations;

finetuning the language model with the associated plurality of training instances of T1, T2, and T3 with the optimum validation loss, wherein each of the plurality of training instances of T2 comprises the paired high sensitive data leakage level text and rephrased output text generated based on the predefined plurality of annotations;

performing the final training of the language model for K epochs with the training instances of T1, T2, and T3; and evaluating the trained language model using a plurality of metrices.

4. The processor implemented method as claimed in claim 3, wherein T1 is evaluated using recall and F1 score metric, and wherein T3 is evaluated using micro and macro averaged F1 scores.

5. The processor implemented method as claimed in claim 3, wherein T2 is evaluated by: (i) computing a cross-reference score by comparing a plurality of rephrased queries, input user queries and a gold standard rephrased query (ii) computing a Named Entity Leakage (NEL) as the percentage of named entity terms in the plurality of rephrased queries occurring as part of false positives (iii) evaluating the plurality of rephrased queries for retaining the maximum original semantics of query-q using CRR score and NEL and (iv) precision of label "LOW" of T1.

6. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive an input user query associated with querying a plurality of large language models (LLMs);

compute a sensitive data leakage level associated with the input user query by prompting a trained enterprise data leakage mitigation model based on a first set of specific instructions (T1) as prefix to the input user query, wherein the sensitive data leakage level is classified as one of (i) a high and (ii) a low based on an associated threshold value;

generate via the trained enterprise data leakage mitigation model if the sensitive data leakage level is higher than a predefined threshold, a plurality of rephrased queries associated with the input user query that retain semantics of the input user query and reduce sensitive data leakage level by prompting the trained enterprise data leakage mitigation model with a second set of specific instructions (T2) as prefix to the user query;

simultaneously identify types of the sensitive data leakage associated with the input user query by prompting the trained enterprise data leakage mitigation model based on a third set of specific instructions (T3) as prefix to the input user query in the trained enterprise data leakage mitigation model; and

repeat the above steps until generating an optimal rephrased query with the sensitive data leakage level less than the predefined threshold.

7. The system of claim 6, wherein the user is allowed to query an associated LLM from among the plurality of LLMs using the input user query only if the sensitive data leakage level is less than a predefined threshold and, wherein identified types of the sensitive data leakage associated with the input user query is intimated to the user.

8. The system of claim 6, wherein the enterprise data leakage mitigation model is obtained by:

receiving a plurality of user queries from a plurality of sources, wherein the plurality of sources comprises queries generated by a group of users, ChatGPT, and queries from a plurality of publicly available datasets;
obtaining a plurality of training instances for T1, T2 and T3 tasks from a plurality of sources, wherein T1 is for classifying the sensitive data leakage level in the plurality of user queries, T2 is for generating rephrased queries if a classified query has high sensitive data leakage level, and T3 is for detecting the types of sensitive data leakage level with respect to pre-defined list sensitive data leakage level;
obtaining a gold-standard labels for the plurality of training instances of T1, T2 and T3, wherein gold-standard labels for training instances of T1, T2 and T3 are obtained from an associated predefined plurality of annotations;
finetuning a pre-trained language model with the training instances of T1 for K epochs, wherein each of the plurality of training instances of T1 comprises input text paired with an expected labelled output text obtained from the predefined plurality of annotations, wherein the plurality of training instances of T1 are debiased using an anomaly detection technique;
finetuning a language model with the associated plurality of training instances of T1, and T3 for K epochs with a validation loss less than a predefined threshold, wherein the validation loss is computed on a validation set in each of the K epochs and an optimum validation loss is selected over the K epochs based on a predefined validation threshold, wherein each of the plurality of training instances of T3 comprises the paired high sensitive data leakage level text and labelled output text generated based on the predefined plurality of annotations;
finetuning the language model with the associated plurality of training instances of T1, T2, and T3 with the optimum validation loss, wherein each of the plurality of training instances of T2 comprises the paired high sensitive data leakage level text and rephrased output text generated based on the predefined plurality of annotations;
performing the final training of the language model for K epochs with the training instances of T1, T2, and T3; and
evaluating the trained language model using a plurality of metrices.

9. The system of claim 8, wherein T1 is evaluated using recall and F1 score metric, and wherein T3 is evaluated using micro and macro averaged F1 scores.

10. The system of claim 8, wherein T2 is evaluated by: (i) computing a cross-reference score by comparing a plurality of rephrased queries, input user queries and a gold standard rephrased query (ii) computing a Named Entity Leakage (NEL) as the percentage of named entity terms in the plurality of rephrased queries occurring as part of false positives (iii) evaluating the plurality of rephrased queries for retaining the maximum original semantics of query-q using CRR score and NEL and (iv) precision of label "LOW" of T1.

11. One or more non-transitory machine-readable information storage mediums comprising one or more instructions which when executed by one or more hardware processors cause:

receiving, by one or more hardware processors, an input user query associated with querying a plurality of large language models (LLMs);
computing, by the one or more hardware processors, a sensitive data leakage level associated with the input user query by prompting a trained enterprise data leakage mitigation model based on a first set of specific instructions (T1) as prefix to the input user query, wherein the sensitive data leakage level is classified as one of (i) a high and (ii) a low based on an associated threshold value;
generating, by the one or more hardware processors, via the trained enterprise data leakage mitigation model if the sensitive data leakage level is higher than a predefined threshold, a plurality of rephrased queries associated with the input user query that retain semantics of the input user query and reduce sensitive data leakage level by prompting the trained enterprise data leakage mitigation model with a second set of specific instructions (T2) as prefix to the user query;
simultaneously identifying, by the one or more hardware processors, types of the sensitive data leakage associated with the input user query by prompting the trained enterprise data leakage mitigation model based on a third set of specific instructions (T3) as prefix to the input user query in the trained enterprise data leakage mitigation model; and

repeating, by the one or more hardware processors, the above steps until generating an optimal rephrased query with the sensitive data leakage level less than the predefined threshold.

12. The one or more non-transitory machine-readable information storage mediums of claim 11, wherein the user is allowed to query an associated LLM from among the plurality of LLMs using the input user query only if the sensitive data leakage level is less than a predefined threshold and, wherein identified types of the sensitive data leakage associated with the input user query is intimated to the user.

13. The one or more non-transitory machine-readable information storage mediums of claim 11, wherein the enterprise data leakage mitigation model is obtained by:

receiving a plurality of user queries from a plurality of sources, wherein the plurality of sources comprises queries generated by a group of users, ChatGPT, and queries from a plurality of publicly available datasets;

obtaining a plurality of training instances for T1, T2 and T3 tasks from a plurality of sources, wherein T1 is for classifying the sensitive data leakage level in the plurality of user queries, T2 is for generating rephrased queries if a classified query has high sensitive data leakage level, and T3 is for detecting the types of sensitive data leakage level with respect to pre-defined list sensitive data leakage level;

obtaining a gold-standard labels for the plurality of training instances of T1, T2 and T3, wherein gold-standard labels for training instances of T1, T2 and T3 are obtained from an associated predefined plurality of annotations;

finetuning a pre-trained language model with the training instances of T1 for K epochs, wherein each of the plurality of training instances of T1 comprises input text paired with an expected labelled output text obtained from the predefined plurality of annotations, wherein the plurality of training instances of T1 are debiased using an anomaly detection technique;

finetuning a language model with the associated plurality of training instances of T1, and T3 for K epochs with a validation loss less than a predefined threshold, wherein the validation loss is computed on a validation set in each of the K epochs and an optimum validation loss is selected over the K epochs based on a predefined validation threshold, wherein each of the plurality of training instances of T3 comprises the paired high sensitive data leakage level text and labelled output text generated based on the predefined plurality of annotations;

finetuning the language model with the associated plurality of training instances of T1, T2, and T3 with the optimum validation loss, wherein each of the plurality of training instances of T2 comprises the paired high sensitive data leakage level text and rephrased output text generated based on the predefined plurality of annotations;

performing the final training of the language model for K epochs with the training instances of T1, T2, and T3; and

evaluating the trained language model using a plurality of metrices.

14. The one or more non-transitory machine-readable information storage mediums of claim 13, wherein T1 is evaluated using recall and F1 score metric, and wherein T3 is evaluated using micro and macro averaged F1 scores.

15. The one or more non-transitory machine-readable information storage mediums of claim 13, wherein T2 is evaluated by: (i) computing a cross-reference score by comparing a plurality of rephrased queries, input user queries and a gold standard rephrased query (ii) computing a Named Entity Leakage (NEL) as the percentage of named entity terms in the plurality of rephrased queries occurring as part of false positives (iii) evaluating the plurality of rephrased queries for retaining the maximum original semantics of query-q using CRR score and NEL and (iv) precision of label "LOW" of T1.

100

MEMORY 104

MODULES 106

REPOSITORY 110

108

I/O INTERFACE
112

HARDWARE
PROCESSORS
102

FIG. 1A

FIG. 1B

200

202

receive an input user query associated with querying a plurality of large language models (LLMs)

204

compute a sensitive data leakage level associated with the input user query by prompting a trained enterprise data leakage mitigation model based on a first set of specific instructions (T1) as prefix to the input user query, wherein the sensitive data leakage level is classified as one of (i) a high and (ii) a low based on an associated threshold value

206

generate via the trained enterprise data leakage mitigation model if the sensitive data leakage level is higher than a predefined threshold, a plurality of rephrased queries associated with the input user query that retain semantics of the input user query and reduce sensitive data leakage level by prompting the trained enterprise data leakage mitigation model with a second set of specific instructions (T2) as prefix to the user query

208

simultaneously identify types of the sensitive data leakage associated with the input user queries by prompting the trained enterprise data leakage mitigation model based on a third set of specific instructions (T3) as prefix to the user query in the trained enterprise data leakage mitigation model

210

repeat the above steps until generating an optimal rephrased query with the sensitive data leakage level less than the predefined threshold

**FIG. 2**

**FIG. 3**

Europäisches Patentamt
European Patent Office
Office européen des brevets

## EUROPEAN SEARCH REPORT

**Application Number**

EP 25 20 3535

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHILI SHEN ET AL: "The Fire Thief Is Also the Keeper: Balancing Usability and Privacy in Prompts", ARXIV.ORG, CORNELL UNIVERSITY LIBRARY, 201 OLIN LIBRARY CORNELL UNIVERSITY ITHACA, NY 14853, 20 June 2024 (2024-06-20), XP091794887, * abstract * * page 1 - page 12 * | 1-15 | INV. G06F21/62 G06F16/332 G06F16/3329 G06F40/20 G06F40/30 G06N3/044 G06N3/045 G06N3/0475 |
| X | ALFIERI COSTANZA ET AL: ""I was Diagnosed with ...": Sensitivity Detection and Rephrasing of Amazon Reviews with ChatGPT", 2024 21ST ANNUAL INTERNATIONAL CONFERENCE ON PRIVACY, SECURITY AND TRUST (PST), IEEE, 28 August 2024 (2024-08-28), pages 1-12, XP034779835, DOI: 10.1109/PST62714.2024.10788076 [retrieved on 2024-12-16] | 1,6,11 | ADD. G06N3/09 |
| A | * page 1 - page 5 * | 2-5, 7-10, 12-15 | |
| A | DOMINIKA WOSZCZYK ET AL: "DiDOTS: Knowledge Distillation from Large-Language-Models for Dementia Obfuscation in Transcribed Speech", ARXIV.ORG, CORNELL UNIVERSITY LIBRARY, 201 OLIN LIBRARY CORNELL UNIVERSITY ITHACA, NY 14853, 5 October 2024 (2024-10-05), XP091904997, * page 3 - page 9 * | 1-15 | |

**TECHNICAL FIELDS SEARCHED (IPC)**

G06F
G06E
G06N

-----

-/--

The present search report has been drawn up for all claims

| Place of search | Date of completion of the search | Examiner |
|---|---|---|
| Munich | 23 February 2026 | Barla Harter, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

**EUROPEAN SEARCH REPORT**

Application Number

EP 25 20 3535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/213988 A1 (PRIVASAPIEN TECH PRIVATE LIMITED [IN]) 17 October 2024 (2024-10-17) * page 2 - page 14; figures 1-3b * ----- | 1-15 | |
| A | RANA SALAL ALI ET AL: "Unintended Memorization and Timing Attacks in Named Entity Recognition Models", ARXIV.ORG, CORNELL UNIVERSITY LIBRARY, 201 OLIN LIBRARY CORNELL UNIVERSITY ITHACA, NY 14853, 4 November 2022 (2022-11-04), XP091360744, * page 1 - page 7 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 23 February 2026 | Barla Harter, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 20 3535

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2026

| Patent document cited in search report | Publication date | Patent family member(s) | Publication date |
|---|---|---|---|
| WO 2024213988 A1 | 17-10-2024 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421084709